# EUROPÄISCHE PATENTSCHRIFT

(11) **EP 3 490 844 B1**
(45) Veröffentlichungstag und Bekanntmachung des Hinweises auf die Patenterteilung: **11.11.2020**
(21) Anmeldenummer: 17722023.3
(22) Anmeldetag: 08.05.2017
(51) Int. Cl.: B60P 7/08

(54) **FLÄCHIGES SICHERUNGSMITTEL**
FLAT SECURING MEANS
MOYEN DE SÉCURITÉ PLAT

(30) Priorität: 29.07.2016 DE 202016104193 U; 20.09.2016 DE 202016105247 U
(43) Veröffentlichungstag der Anmeldung: 05.06.2019
(73) Patentinhaber: Westdeutscher Drahtseil-Verkauf Dolezych GmbH & Co. KG, 44147 Dortmund (DE)
(72) Erfinder: SCHÖBEL, Uwe, 58730 Fröndenberg (DE)
(74) Vertreter: Andrejewski - Honke Patent- und Rechtsanwälte Partnerschaft mbB
(86) Internationale Anmeldenummer: PCT/EP2017/060945
(87) Internationale Veröffentlichungsnummer: WO 2018/019439

(56) Entgegenhaltungen:
- EP-B1- 1 640 210
- DE-U1-202015 106 725
- US-A1- 2010 178 129

## Beschreibung

Die Erfindung betrifft ein flächiges Sicherungsmittel, insbesondere ein Sicherungsnetz, zum Sichern einer Ladung während ihres Transportes auf der Ladefläche eines Fahrzeuges bzw. Kraftfahrzeuges, mit einer flexiblen Sicherungsfläche, welche als Netzwerk aus sich kreuzenden Gurten oder Seilen ausgebildet ist, und mit wenigstens einer Sicherungsstange, welche mit dem Netzwerk über Schlaufen verbunden ist, wobei die Sicherungsstange mit wenigstens einem Haken zur Festlegung der Sicherungsstange beispielsweise an einer Bordwand ausgerüstet ist.

Der gattungsbildende Stand der Technik nach der DE 20 2015 106 725 U1 beschäftigt sich ganz generell mit einer Vorrichtung zur Ladungssicherung in einem Laderaum unter Rückgriff auf zwei als jeweils Sicherungsstangen ausgebildeten Trägern. Zwischen den beiden Trägern ist eine flexible Textilie angeordnet. Der Träger verfügt über mindestens einen längs des Trägers verschiebbaren und am Träger lösbar festgelegten Beschlag, welcher ein Befestigungsmittel trägt. Der Beschlag setzt sich aus zwei den Träger umfassendem Beschlagteilen zusammen, mit deren Hilfe die Beschlagteile am Träger klemmbefestigt sind.

Der Träger verfügt über einen in Einbaulage nach unten weisenden Finger, der zum Eingriff in eine Öse vorgesehen und eingerichtet ist. Darüber hinaus und unabhängig hiervon verfügt der Träger über eine mindestens eine Hinterschneidung bildende Nut. Innerhalb der Nut lässt sich ein Klemmkörper verschieben, mit deren Hilfe die Textilie bzw. das Sicherungsnetz in der Nut klemmbefestigt ist. Aufgrund der unterschiedlichen konstruktiven Auslegung einerseits des Fingers am Trägerbeschlag und andererseits des in der Nut geführten Klemmkörpers zur Festlegung des Sicherungsnetzes ist die Montage und Handhabung aufwendig.

Flächige Sicherungsmittel vergleichbaren Aufbaus werden beispielhaft in der DE 20 2006 013 193 U1 der Anmelderin beschrieben und dienen dazu, eine Ladung auf einem Ladebordboden bzw. einer Ladefläche des Fahrzeuges und insbesondere Kraftfahrzeuges zu sichern. Die Ladung liegt zu diesem Zweck auf der Ladefläche auf. Mithilfe der Sicherungsstange wird das bekannte Ladungssicherungsaggregat bzw. flächige Sicherungsmittel zwischen zwei Ladebordwänden festgelegt. Dazu handelt es sich bei der Sicherungsstange um eine gegen Federkraft längenveränderliche Sicherungsstange. Außerdem wird die Sicherungsstange endseitig in Ausnehmungen an den Ladebordwänden festgelegt.

Beim Stand der Technik nach der EP 1 640 210 B1 ist die Sicherungsstange als Teleskopstange ausgeführt. Dadurch definiert die Sicherungsstange eine Festrandseite der Sicherungsfläche, während an wenigstens einer Losrandseite der Sicherungsfläche zumindest ein Verbindungsgurt zur längenvariablen Festlegung der Sicherungsfläche an der Ladefläche vorgesehen ist. Auf diese Weise soll eine Festlegung des flächigen Sicherungsmittels ohne vorgesehene Zurrpunkte gelingen und folglich das Anwendungsspektrum vergrößert werden.

Ein vergleichbares flächiges Sicherungsmittel beschreibt die US 5 058 786. Hier ist ein Sicherungsnetz realisiert, welches an eine Art Palette aus mehreren Sicherungsstangen angeschlossen ist. Dadurch wird eine Sicherungs-einrichtung zur Verfügung gestellt, die insbesondere zur Aufnahme und Sicherung einer Vielzahl kleinerer Packstücke dient.

Die in diesem Zusammenhang schließlich noch einschlägige DE 196 34 104 C1 befasst sich mit einem Netz zur Lagesicherung von Ladegut auf Ladeflächen von Fahrzeugen. Dabei sind beidseitig im Randbereich des Netzes längsverlaufende und längenveränderbare Zugmittel gegen die Ladefläche festlegbar. Entlang einer Festlegungsseite ist eine eigenstabile Stange am Netz angeordnet. Dadurch soll das Ladegut insgesamt sicher an der Ladefläche gehalten werden.

Durch die US 2010/0178129 A1 ist schließlich eine Netzanordnung bekannt geworden, die sich insbesondere in Verbindung mit Flugzeugen anbietet. Dabei ist das jeweilige Netz fest mit der Sicherungsstange verbunden.

Die zuvor beschriebenen flächigen Sicherungsmittel haben sich grundsätzlich bewährt. Tatsächlich sorgt die in diesem Zusammenhang mit der flexiblen Sicherungsfläche gekoppelte starre Sicherungsstange typischerweise dafür, dass die flexible Sicherungsfläche mit zumindest einer Festrandseite ausgerüstet ist und sich auf diese Weise über die Sicherungsstange entweder direkt an einer Bordwand festlegen lässt oder auch zwischen zwei Bordwänden fixiert werden kann. Das hat sich grundsätzlich bewährt. Allerdings sind Verbesserungen möglich. Tatsächlich hat sich in der Praxis herausgestellt, dass die Kopplung der flexiblen Sicherungsfläche mit der Sicherungsstange oftmals zu Verschiebungen der Sicherungsfläche gegenüber der Sicherungsstange führen kann. Als Folge hiervon ist eine einwandfreie Ladungssicherung nicht (mehr) rundweg gegeben. Außerdem werden zusätzliche Anforderungen an solche flächigen Sicherungsmittel gestellt, beispielsweise derart, dass das fragliche Sicherungsmittel an einer Bordwand eines Laderaumes festgelegt werden soll. Hier setzt die Erfindung ein.

Der Erfindung das technische Problem zugrunde, ein derartiges flächiges Sicherungsmittel so weiter zu entwickeln, dass eine einwandfreie Festlegung an beispielsweise einer Bordwand problemlos gelingt und die Sicherung der Ladung nochmals verbessert ist.

Zur Lösung dieser technischen Problemstellung ist ein gattungsgemäßes flächiges Sicherungsmittel im Rahmen der Erfindung dadurch gekennzeichnet, dass der Haken und eine Öse zur Festlegung der jeweiligen Schlaufe als Bestandteil eines stufenlos an der Sicherungsstange festlegbaren Adapters ausgebildet sind.

Im Regelfall sind zwei Haken an der Sicherungsstange vorgesehen. Die Haken definieren in der Regel einen Eingriffkanal zur Wechselwirkung mit der Bordwand. Zu diesem Zweck kann beispielsweise eine Lasche, ein Steg etc. an der Bordwand in den fraglichen und von den beiden Haken definierten Eingriffkanal eingreifen. Dabei ist die Auslegung meistens so getroffen, dass die beiden Haken jeweils eine Eingrifföffnung definieren.

Die jeweiligen Eingrifföffnungen der Haken beschreiben dann den Eingriffkanal. Zu diesem Zweck könnnen die Eingrifföffnungen größtenteils miteinander fluchten. Das bedeutet, dass in Seitenansicht auf die jeweilige Eingrifföffnung ein geringfügiger seitlicher Versatz zwischen den beiden Eingrifföffnungen zugelassen wird. Dieser Versatz sorgt dafür oder kann dafür sorgen, dass zwischen dem Eingriffkanal und der darin eingreifenden Lasche, dem Steg etc. an der Bordwand eine gewünschte Klemmwirkung beobachtet wird.

Außerdem ist es auf diese Weise möglich, dass die betreffende Sicherungsstange in an der Bordwand montiertem Zustand zunächst schräg gestellt ist oder schräg gestellt wird und bei einer Belastung in Längsrichtung der Ladefläche des Fahrzeuges mit den im Eingriffkanal aufgenommenen Steg, der Lasche etc. verklemmt wird.

In diesem Zusammenhang ist die Auslegung meistens so getroffen, dass die jeweils vom Haken definierte Eingrifföffnung größtenteils in Axialrichtung der Sicherungsstange verläuft. Gleiches gilt dann auch für den von den beiden Eingrifföffnungen beschriebenen Eingriffkanal. Der Versatz der Eingrifföffnungen zueinander kann maximal der Spaltbreite der Eingrifföffnung entsprechen. Da die Eingrifföffnung größtenteils in Axialrichtung der Sicherungsstange verläuft, beobachtet man den fraglichen Versatz zwischen den beiden Eingrifföffnungen in Querrichtung hierzu. Da die beiden den Haken zugeordnete Eingrifföffnungen größtenteils zueinander fluchten und darüber hinaus im Wesentlichen in Axialrichtung der Sicherungsstange verlaufen, wird auch für den Eingriffkanal ein Verlauf größtenteils in Axialrichtung der Sicherungsstange beobachtet.

Dadurch kann der fragliche Steg, eine Lasche etc. an der Bordwand in dieser Axialrichtung in die Sicherungsstange eingeführt werden. Der in Aufsicht auf die beiden Eingrifföffnungen beobachtete seitliche Versatz zueinander sorgt in diesem Zusammenhang im Regelfall dafür, dass die Sicherungsstange nach ihrer Montage zunächst schräg gestellt ist oder schräg gestellt werden kann und bei einer Kraftbeaufschlagung in Längsrichtung der Ladefläche des Fahrzeuges mit dem fraglichen Steg oder der Lasche an der Bordwand verklemmt wird.

Hierzu trägt ergänzend der Umstand bei, dass der Eingriffkanal und mit ihm die beiden den Eingriffkanal definierenden Eingrifföffnungen nicht streng in Axialrichtung der Sicherungsstange verlaufen, sondern überwiegend in dieser Axialrichtung. D.h., der Eingriffkanal und mit ihm die beiden den Eingriffkanal definierenden Eingrifföffnungen verlaufen im Vergleich zu der fraglichen Axialrichtung der Sicherungsstange im Regelfall geneigt, und zwar in Richtung auf das an die Sicherungsstange angeschlossene Netzwerk. Dabei wird im Allgemeinen ein Neigungswinkel des Eingriffskanals und folglich der beiden den Eingriffkanal definierenden Eingrifföffnungen von weniger als 20° beobachtet. Insbesondere beträgt die Neigung sogar weniger als 10° und vorzugsweise bis zu 5°.

Zum Anschluss der flexiblen Sicherungsfläche aus den sich kreuzenden Gurten oder Seilen greifen die Schlaufen des Netzwerkes erfindungsgemäß in die Öse an der Sicherungsstange bzw. an Adapter ein. Die Auslegung ist dabei so getroffen, dass die Sicherungsstange gegenüberliegend zum Haken mit wenigstens der Öse zur Festlegung der jeweiligen Schlaufe des Netzwerkes ausgerüstet ist. Dabei können im Rahmen einer nicht zur Erfindung gehörigen Variante der Haken und die Öse jeweils als integrale Bestandteile der Sicherungsstange ausgebildet sein. Daraus resultieren Fertigungsvorteile. Denn die Sicherungsstange kann inklusive der Öse bzw. der mehreren Ösen ebenso wie der darin angeordneten Haken respektive der mehreren Haken in einem einzigen Arbeitsschritt hergestellt werden. Diese nicht beanspruchte Alternative der Erfindung ist jedoch mit dem Nachteil verbunden, dass die Haken und folglich die jeweils gebildeten Eingriffkanäle einen bestimmten Abstand in Axialrichtung der Sicherungsstange zueinander aufweisen. Das setzt bei einer Anbringung an der Bordwand folglich voraus, dass die Stege bzw. Laschen an der Bordwand an den entsprechenden Abstand der Eingriffkanäle zueinander angepasst sind.

Die erfindungsgemäße Alternative sieht vor, dass der Haken und die Öse als Bestandteile des stufenlos an der Sicherungsstange festlegbaren Adapters ausgebildet sind. Dieser Adapter kann dabei unterschiedliche Funktionen übernehmen. Im Rahmen einer ersten Variante dient der Adapter zur Sicherung der jeweiligen Schlaufe des an der Sicherungsstange festgelegten Netzwerkes. Hierbei geht die Erfindung von der Erkenntnis aus, dass der Adapter zur Sicherung der jeweiligen Schlaufe verhindert, dass sich die an der Sicherungsstange festgelegte Schlaufe gegenüber der Sicherungsstange verschieben kann. Eine solche Verschiebung verhindert der eine oder verhindern die mehreren stufenlos an der Sicherungsstange festlegbaren Adapter. Denn mit ihrer Hilfe wird die jeweilige Schlaufe gegenüber der Sicherungsstange fixiert.

Da der Adapter an der Sicherungsstange stufenlos festlegbar ist, kann die Position des Adapters an die jeweilige Auslegung des Netzwerkes und insbesondere dessen jeweilige Maschengröße angepasst werden. Sofern es sich bei dem Netzwerk um ein solches aus sich kreuzenden und miteinander verbundenen Gurten handelt, kommen mehrere Adapter an der Sicherungsstange zum Einsatz, deren Abstand untereinander dem Abstand der jeweils hieran über Schlaufen festgelegten Quergurte oder Längsgurte entspricht. Dadurch wird sichergestellt, dass sich die Schlaufen des Netzwerkes an der Sicherungsstange nicht axial gegenüber der Sicherungsstange verschieben können.

Vielmehr sorgen für die jeweilige Festlegung der Schlaufen die zugehörigen Adapter, die ihrerseits an der Sicherungsstange festgelegt sind. Dadurch wird die Ladung nochmals gegenüber dem Stand der Technik mit verbessertem Ergebnis fixiert, weil Bewegungen der flexiblen Sicherungsfläche gegenüber der Sicherungsstange auf diese Weise ausgeschlossen sind. Sofern darüber hinaus beispielsweise eine zu der solchermaßen definierten Festrandseite der Sicherungsfläche gegenüberliegende Losrandseite mithilfe von einem oder mehreren angeschlossenen Zurrmitteln mit der Ladefläche gekoppelt ist, kann die auf der Ladefläche befindliche Ladung praktisch (mehr) verrutschen.

Erfindungsgemäß dient der zumindest eine an der Sicherungsstange stufenlos festlegbare Adapter zur Festlegung der Sicherungsstange beispielsweise an einer Bordwand. Das heißt, der Adapter sorgt für die Kopplung der Sicherungsstange und folglich die Verbindung des flächigen Sicherungsmittels insgesamt mit der Bordwand im Beispielfall. Dazu mag der jeweilige Adapter den einen oder die mehrere Haken aufweisen. Mithilfe dieser Haken kann der Adapter in Ausnehmungen der Bordwand eingehängt werden. Es ist aber auch möglich, über den einen oder die mehreren Haken des Adapters eine lösbare Kopplung der auf diese Weise ausgerüsteten Sicherungsstange an einem weiteren Netzwerk zu realisieren. Dieses Netzwerk kann als Bordwand oder auch als Trennwand, als Rückwand etc. eines Laderaumes vorgesehen werden. Da sich der Adapter zur Festlegung beispielsweise an der Bordwand erneut stufenlos an der Sicherungsstange fixieren lässt, kann die Sicherungsstange und folglich das flächige Sicherungsmittel an die jeweilige Auslegung des Netzwerkes im Beispielfall als Bestandteil oder Ersatz der Bordwand unschwer angepasst werden. Vergleichbares gilt für den Fall, dass die Bordwand mit entsprechenden Ausnehmungen für den jeweiligen Haken des Adapters ausgerüstet ist.

Jedenfalls lässt sich auch in diesem Fall das erfindungsgemäße flächige Sicherungsmittel einwandfrei festlegen, und zwar im Regelfall an der Bordwand eines Laderaumes. Dadurch kommt es erneut zu einer im Vergleich zum Stand der Technik gesteigerten Sicherung der Ladung auf der Ladefläche, weil die Sicherungsstange und mit ihr die darauf stufenlos festgelegten Adapter für eine lösbare und zugleich einwandfreie Festlegung des flächigen Sicherungsmittels über die Sicherungsstange an der betreffenden Bordwand im Beispielfall sorgen. Relativbewegungen zwischen der Sicherungsstange und folglich dem Sicherungsmittel und der Bordwand sind nicht oder praktisch nicht zu befürchten, so dass wiederum die Ladungssicherung verbessert ist.

Nach vorteilhafter Ausgestaltung kann der Adapter zur stufenlosen Festlegung an oder in einer Führungseinrichtung an der Sicherungsstange stufenlos feststellbar fixiert werden. Bei der fraglichen Führungseinrichtung mag es sich um eine in die Sicherungsstange eingelassene Führungsnut handeln.

Im Regelfall ist die Sicherungsstange als Zylinderstange ausgelegt. Um das Gewicht des solchermaßen realisierten flächigen Sicherungsmittels möglichst niedrig einzustellen, hat sich an dieser Stelle eine Aluminiumstange als Sicherungsstange bzw. Zylinderstange als besonders günstig erwiesen. Bei der Führungsnut zur Festlegung des Adapters handelt es sich meistens um einen an eine Schlitzöffnung der Zylinderstange innenseitig anschließenden Führungskanal. Derartige Zylinderstangen mit innenseitigem und an eine Schlitzöffnung anschließendem Führungskanal sind kommerziell erhältlich und folglich zu einem geringen Preis. Dabei kann der an die Schlitzöffnung innenseitig anschließende Führungskanal insgesamt kreisförmig ausgelegt sein.

Tatsächlich hat sich in diesem Zusammenhang eine Auslegung dergestalt als günstig erwiesen, dass sowohl die Zylinderstange als solche als auch der Führungskanal jeweils im Querschnitt kreisförmig mit übereinstimmender Schlitzöffnung ausgebildet sind. Der Durchmesser des kreisförmigen Führungskanals entspricht dabei in etwa dem 0,5 bis 0,7-fachen des Durchmessers der Zylinderstange. Dadurch kann der Führungskanal nicht nur zur Aufnahme und Führung des einen oder der mehreren Adapter eingesetzt werden, sondern sorgt insgesamt auch für eine Versteifung der Sicherungsstange als solcher.

Grundsätzlich kann einerseits ein Adapter zur Sicherung der jeweiligen Schlaufe und andererseits ein Adapter zur Festlegung an der Bordwand im Rahmen einer nicht erfindungsgemäßen Variante realisiert sein. Das heißt, es können ein Schlaufenadapter und ein Bordwandadapter bzw. mehrere Schlaufenadapter und mehrere Bordwandadapter an die Sicherungsstange stufenlos festlegbar angeschlossen werden. Erfindungsgemäß werden jedoch beide Funktionen von einem einzigen Adapter übernommen, der dann zugleich als Schlaufenadapter und Bordwandadapter ausgelegt ist.

In diesem Fall ist der Adapter nicht nur zur Sicherung der jeweiligen Schlaufe des Netzwerkes, sondern auch zur Festlegung des Netzwerkes an einer Wand und insbesondere einer Bordwand oder Trennwand eingerichtet. Dazu verfügt der Adapter erfindungsgemäß über eine Öse zur Festlegung der jeweiligen Schlaufe. Außerdem ist der Adapter dann noch mit einem Haken zu seiner lösbaren Fixierung an der Wand und insbesondere Bordwand ausgerüstet.

Im Rahmen dieser gleichsam einteiligen und erfindungsgemäßen Auslegung des Adapters und der Zusammenführung seiner Funktionen als Schlaufenadapter und Bordwandadapter kann im Rahmen einer erfindungsgemäßen Variante der Adapter als einteilig gebogener Draht ausgebildet sein bzw. aus einem solchen einteilig gebogenen Draht hergestellt werden. Tatsächlich wird der Draht in diesem Zusammenhang und typischerweise zur Herstellung des Adapters G-förmig gebogen. Aufgrund dieser G-Form des Drahtes bzw. des solchermaßen realisierten Adapters lassen sich die beiden beschriebenen Funktionen einerseits zur Festlegung der jeweiligen Schlaufe des Netzwerkes und andererseits zur Festlegung des flächigen Sicherungsmittels bzw. der Sicherungsstange an einer Wand respektive Bordwand besonders vorteilhaft und günstig zusammenführen.

In diesem Zusammenhang fungiert der Bauch der G-Form des Drahtes als Öse zur Festlegung der jeweiligen Schlaufe, wohingegen der oberhalb des Bauches des G's verlaufende Schenkel die Funktion eines Hakens zur lösbaren Verbindung des Adapters und folglich der Sicherungsstange mit einer Wand respektive Bordwand übernimmt.

Die Erfindung sieht bevorzugt vor, dass der Adapter als die Sicherungsstange umgreifender Klemmadapter ausgebildet ist. In diesem Fall ist eine Führungseinrichtung an der Sicherungsstange im Regelfall entbehrlich, wenngleich möglich. Sofern der Adapter als die Sicherungsstange umgreifender Klemmadapter ausgebildet ist, hat es sich bewährt, wenn der Adapter im Querschnitt Ω-förmig ausgebildet ist. Dieser im Querschnitt Ω-förmige Adapter bzw. Klemmadapter verfügt im Regelfall über einen Stangenbereich und zwei daran anschließende Klemmschenkel.

Der Stangenbereich des Ω-förmigen Adapters umschließt dabei die Sicherungsstange, die hierzu im Allgemeinen als Zylinderstange aus beispielsweise Aluminium ausgelegt ist. Die Klemmschenkel sind über zumindest ein Verbindungsmittel abstandsvariabel miteinander gekoppelt. Mit Hilfe des Verbindungsmittels lassen sich folglich die Klemmschenkel in ihrem Abstand zueinander verändern und kann dadurch der Klemmadapter in jeder gewünschten Position stufenlos auf der Sicherungsstange festgelegt werden.

Im Ergebnis wird ein flächiges Sicherungsmittel zur Verfügung gestellt, welches die flexible und als Netzwerk ausgebildete Sicherungsfläche mit der daran über Schlaufen festgelegten wenigstens einen Sicherungsstange kombiniert. Die Sicherungsstange wird mit zumindest einem hieran stufenlos festlegbaren Adapter ausgerüstet. Der Adapter kann zwei Funktionen übernehmen. Zunächst einmal dient der Adapter typischerweise zur Sicherung der jeweiligen Schlaufe des Netzwerkes gegenüber der Sicherungsstange. Tatsächlich sorgt der Adapter in diesem Zusammenhang für eine axiale Sicherung der jeweiligen Schlaufe gegenüber der Sicherungsstange, so dass die Schlaufe und mit ihm die flexible Sicherungsfläche nicht hin und her gegenüber der Sicherungsstange verschoben werden kann.

Darüber hinaus kann der Adapter eine weitere Funktion dergestalt übernehmen, dass er für eine lösbare Festlegung der Sicherungsstange und folglich des flächigen Sicherungsmittels insgesamt an einer Wand und insbesondere Bordwand sorgt oder sorgen kann. Die Bordwand kann dabei fest ausgelegt und mit entsprechenden Öffnungen oder Einkerbungen ausgerüstet sein, um den jeweiligen Adapter hierin lösbar aufzunehmen. Auch die zuvor bereits angesprochenen Stege oder Laschen an der festen Bordwand sind denkbar. Ganz besonders bevorzugt ist in diesem Zusammenhang jedoch eine Variante, bei welcher die Wand respektive Bordwand ganz oder teilweise als Netzwerk ausgebildet ist. In diesem Fall übergreift der Adapter einzelne, das Netzwerk definierende Gurte oder Seile. Dadurch kann das Sicherungsmittel als Strukturelement beispielsweise zur Segmentierung der Ladefläche eingesetzt werden. Außerdem kann das flächige Sicherungsmittel einen Bestandteil des auf diese Weise realisierten Laderaumes definieren, beispielsweise eine Längswand des Laderaumes ebenso wie eine Querwand, eine Rückwand oder auch eine Frontwand. Hierin sind die wesentlichen Vorteile zu sehen.

Im Folgenden wird die Erfindung anhand einer lediglich ein Ausführungsbeispiel darstellenden Zeichnung näher erläutert; es zeigen:
- **Fig. 1**: das flächige Sicherungsmittel im Rahmen einer erfindungsgemäßen Variante in einer Übersicht,
- **Fig. 2**: die Sicherungsstange als Bestandteil des flächigen Sicherungsmittels nach Fig. 1 in einer abgewandelten erfindungsgemäßen Variante,
- **Fig. 3**: eine weitere Variante der Sicherungsstange nach der Fig. 2 entsprechend der Erfindung,
- **Fig. 4**: eine Einbausituation des flächigen Sicherungsmittels bei einem Kraftfahrzeug, insbesondere einem LKW-Auflieger mit dargestelltem Laderaum,
- **Fig. 5**: eine erfindungsgemäße Sicherungsstange mit daran festgelegtem Adapter in einer weiteren Variante,
- **Fig. 6**: den Adapter entsprechend der Darstellung in der Fig. 5 in verschiedenen Ansichten und
- **Fig. 7**: eine weitere nicht erfindungsgemäß ausgelegte Sicherungsstange in Verbindung mit dem flächigen Sicherungsmittel.

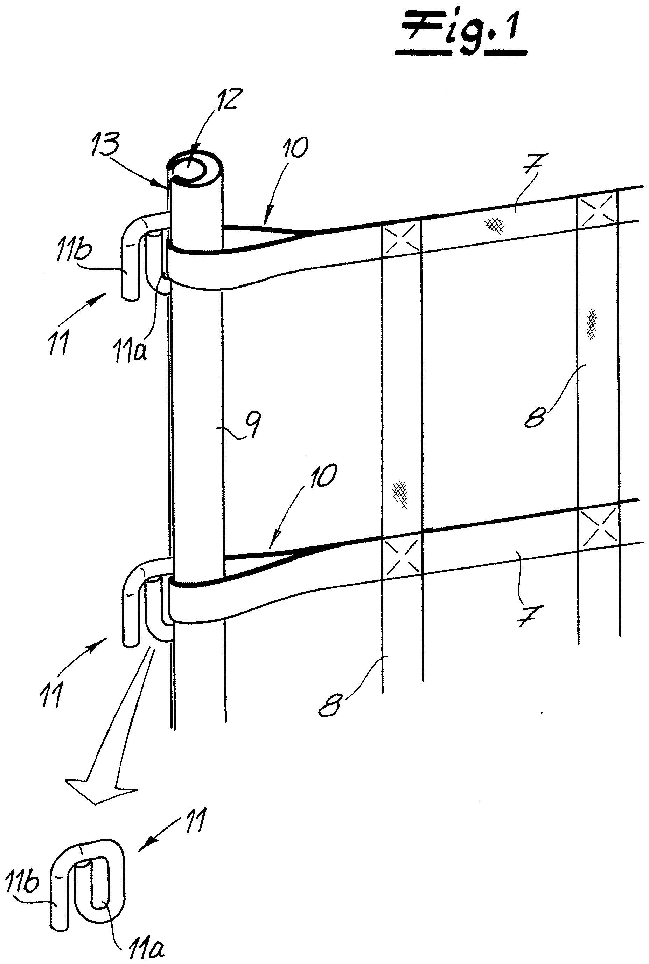

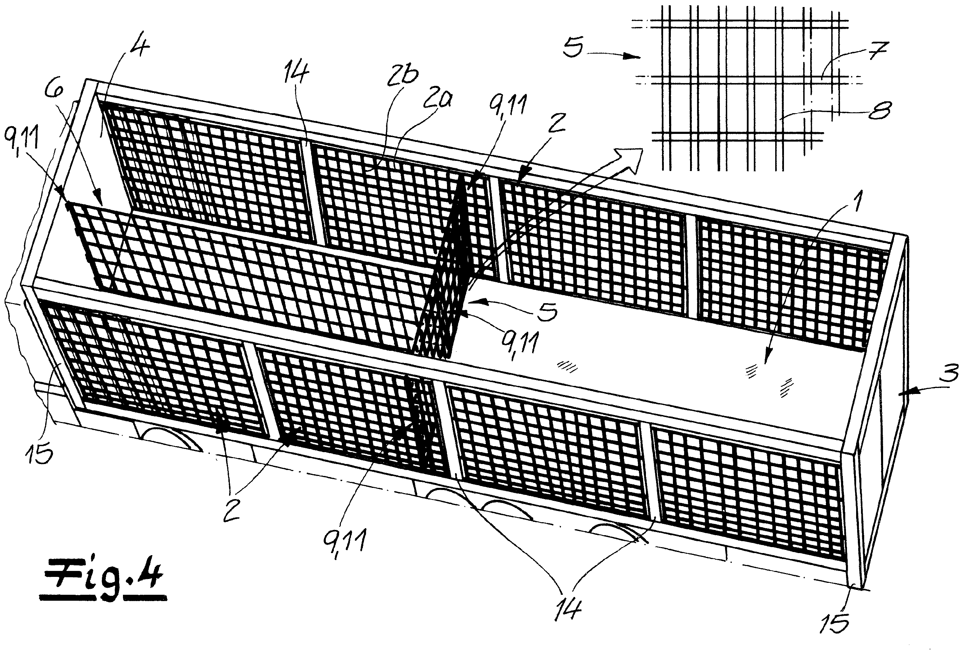

In der Fig. 1 ist ein flächiges Sicherungsmittel dargestellt. Das flächige Sicherungsmittel dient zum Sichern einer Ladung während ihres Transportes auf der Ladefläche 1 eines Kraftfahrzeuges. In der Fig. 4 erkennt man die betreffende Ladefläche 1, welche den Boden eines dort dargestellten und nach oben hin offenen Laderaumes 2 bis 6 eines LKW-Aufliegers definiert. Innerhalb dieses Laderaumes 2 bis 6 wird mithilfe des einen flächigen Sicherungsmittels oder mehrerer solcher flächiger Sicherungsmittel ggf. in Verbindung mit weiteren Strukturelementen wie einer oder mehreren festen Bordwänden, die auf der Ladefläche 1 befindliche Ladung gesichert und an einem Verrutschen gehindert.

Der Detailaufbau des flächigen Sicherungsmittels in einer ersten Variante ergibt sich anhand der Fig. 1. Tatsächlich setzt sich das flächige Sicherungsmittel aus einer flexiblen Sicherungsfläche zusammen, welche vorliegend als Netzwerk 7, 8 aus sich kreuzenden Gurten 7, 8 ausgebildet ist. Bei den Gurten 7, 8 handelt es sich um gewebte Kunststoffgurte aus beispielsweise Polyamidfäden oder -fasern. Man erkennt einerseits Quergurte 7 und andererseits Längsgurte 8, die sich jeweils in Kreuzungsstellen schneiden und miteinander verbunden sind. Im Ausführungsbeispiel nach der Fig. 1 sind die Quergurte 7 jeweils mit einer Sicherungsstange 9 gekoppelt. Dazu sind endseitig der jeweiligen Quergurte 7 Schlaufen 10 ausgebildet, welche die Sicherungsstange 9 umgreifen. Tatsächlich ist das jeweilige Ende des Quergurtes 7 schlaufenförmig um die Sicherungsstange 9 herumgelegt und mit seinem Ende mit dem durchgängigen Quergurt 7 im Beispielfall vernäht oder anderweitig verbunden.

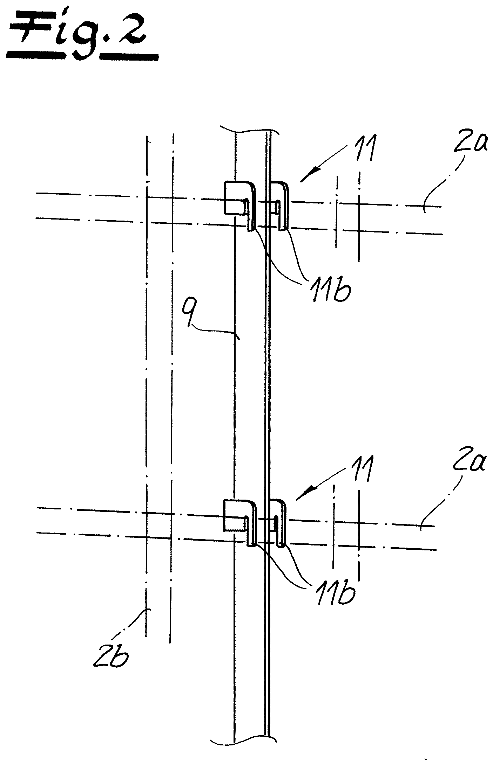

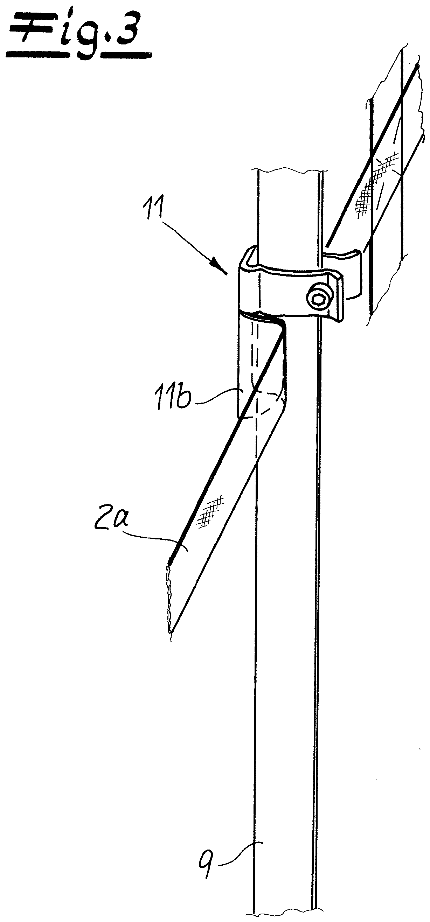

Bei der Sicherungsstange 9 handelt es sich im Ausführungsbeispiel um eine Zylinderstange aus Aluminium. Außerdem erkennt man, dass die Sicherungsstange 9 mit mehreren hieran stufenlos festlegbaren Adaptern 11 ausgerüstet ist. Die Adapter 11 dienen im Rahmen der Variante nach der Fig. 1 zur Sicherung der jeweiligen Schlaufe 10 des Netzwerkes 7, 8 aus den sich kreuzenden Gurten 7, 8. Ferner sorgen die anders aufgebauten Adapter 11 bei der Variante nach den Figuren 2 und 3 dafür, dass die Sicherungsstange 9 lösbar an einer Bordwand 2 bis 6 des Laderaumes 2 bis 6 entsprechend der Darstellung nach der Fig. 4 festgelegt werden kann. Das wird nachfolgend noch näher erläutert.

Im Rahmen der Variante nach der Fig. 1 dient der dortige Adapter 11 sowohl zur Sicherung der jeweiligen Schlaufe 10 des Quergurtes 7 des Netzwerkes 7, 8 als auch zur Festlegung der Sicherungsstange 9 und folglich des gesamten flächigen Sicherungsmittels an der zugehörigen Bordwand 2 bis 6 des Laderaumes 2 bis 6. Zu diesem Zweck lässt sich der Adapter 11 an oder in einer Führungseinrichtung 12 an der Sicherungsstange 9 stufenlos festlegen.

Bei der Führungseinrichtung 12 handelt es sich im Ausführungsbeispiel um einen Führungskanal 12, welcher sich innenseitig an eine Schlitzöffnung 13 anschließt. Das heißt, bei der Führungseinrichtung 12 handelt es sich um eine Führungsnut 12 oder auch einen Führungskanal 12, welcher in die Sicherungsstange 9 eingelassen ist. Nach dem Ausführungsbeispiel ist nicht nur die Sicherungsstange 9 als Zylinderstange ausgelegt und folglich mit einem kreisförmigen Querschnitt ausgerüstet. Denn vergleichbares gilt für die Führungsnut 12, welche ebenfalls im Querschnitt kreisförmig ausgebildet ist.

Dabei ist die Anordnung und Auslegung jeweils so getroffen, dass sowohl die im Querschnitt kreisförmige Sicherungsstange 9 als auch der im Querschnitt kreisförmige Führungskanal 12 jeweils gemeinsam an die Schlitzöffnung 13 anschließen. Außerdem ist die Auslegung so getroffen, dass der im Querschnitt kreisförmige Führungskanal 12 einen Durchmesser aufweist, welcher in etwa das 0,5 bis 0,7-fache des Durchmessers der ebenfalls im Querschnitt kreisförmigen Zylinderstange 9 beträgt.

Der in der Fig. 1 dargestellte Adapter 11 dient - wie beschrieben - nicht nur zur Sicherung der jeweiligen Schlaufe 10 des Netzwerkes 7, 8, sondern auch zur Festlegung des Netzwerkes 7, 8 an einer Wand und insbesondere einer Bordwand 2 bis 6 des Laderaumes 2 bis 6 oder auch an einer Trennwand. Die Trennwand trägt bei dem Laderaum 2 bis 6 das Bezugszeichen 5 bzw. 6. Tatsächlich sind an dieser Stelle zwei Trennwände 5, 6 realisiert, nämlich eine Quertrennwand 5 und eine Längstrennwand 6.

Der Adapter 11 verfügt über eine Öse 11a zur Festlegung der jeweiligen Schlaufe 10. Darüber hinaus ist der Adapter 11 nach der Darstellung in der Fig. 1 mit einem Haken 11b zur Festlegung an der betreffenden Wand bzw. Bordwand 2 bis 6 ausgerüstet. Bei dem Adapter 11 handelt es sich um einen einteilig gebogenen Draht. Tatsächlich wird der Draht insgesamt bei seiner Herstellung G-förmig gebogen, wie die separate Darstellung in der Fig. 1 deutlich macht. Dabei ist die Auslegung so getroffen, dass der Bauch der G-Form die Öse 11a zur Festlegung der Schlaufe 10 definiert. Demgegenüber fungiert der Schenkel des G als Haken 11b zur Festlegung des solchermaßen ausgelegten Adapters 11 an einer Wand bzw. Bordwand 2 bis 6 des Laderaumes 2 bis 6.

Der Adapter 11 im Rahmen der Darstellung nach der Fig. 2 verfügt über zwei hieran ausgebildete Haken 11b, mit deren Hilfe er jeweilige Quergurte 2a eines Netzwerkes 2a, 2b bei der Variante nach der Fig. 4 lösbar übergreifen kann. Tatsächlich setzt sich das Netzwerk 2a, 2b erneut aus Quergurten 2a und Längsgurten 2b zusammen, die ein Netzwerk 2a, 2b definieren, welches im Rahmen dieser Variante ganz oder teilweise eine Längsbordwand 2 bildet. Auch an der gegenüberliegenden Längsbordwand 2 mag das solchermaßen realisierte erfindungsgemäße flächige Sicherungsmittel entsprechend der Ausführungsform nach der Fig. 1 mit einer weiteren Sicherungsstange 9 lösbar festgelegt sein. Die beiden Haken 11b des Adapters 11 bei der Variante nach der Fig. 2 der dortigen Sicherungsstange 9 sind beabstandet zueinander angeordnet und übergreifen jeweils gemeinsam einen Quergurt 2a des dortigen Netzwerkes 2a, 2b. Auf diese Weise wird die Sicherungsstange 9 gegenüber dem Netzwerk 2a, 2b ausgerichtet und kann beispielsweise nicht hin- und herschwenken.

Vergleichbares gilt für den Adapter 11, wie er in der Fig. 3 dargestellt ist. In diesem Fall wird der jeweilige und hier lediglich angedeutete Quergurt 2a des Netzwerkes 2a, 2b bei der Längsbordwand 2 jeweils zwischen dem Haken 11b und der Sicherungsstange 9 gleichsam festgeklemmt bzw. mithilfe des Hakens 11 umgelenkt. Dadurch wird die Sicherungsstange 9 zwar lösbar, aber dennoch fest an dem Netzwerk 2a, 2b festgelegt.

In der Fig. 4 erkennt man nun einen LKW-Auflieger mit den einzelnen Bordwänden 2 bis 6. Dabei sind die beiden Längsbordwände 2 vollständig aus den bereits angesprochenen mehreren Netzwerken 2a, 2b ausgebildet. Demgegenüber ist eine Rückwand 3 ebenso wie eine Frontwand 4 jeweils konventionell und starr ausgebildet.

Das erfindungsgemäße flächige Sicherungsmittel lässt sich nun einerseits als Quertrennwand 5 und andererseits als Längstrennwand 6 mit den fraglichen übrigen Bordwänden 2, 3, 4 bzw. untereinander lösbar koppeln. Dazu sind jeweils die randseitigen Sicherungsstangen 9 realisiert, welche im Beispielfall der Längstrennwand 6 einerseits mit der festen Bordwand 4 und andererseits mit der Querwand 5 bzw. dem dortigen Netzwerk 7, 8 gekoppelt werden.

Für die Kopplung der Sicherungsstange 9 mit der festen Frontwand 4 wird im Allgemeinen so vorgegangen, dass die einzelnen Haken 11b der Adapter 11 an der Sicherungsstange 9 in zugehörige Ausnehmungen in der Frontwand 4 eingreifen. Die demgegenüber gegenüberliegende Sicherungsstange 9 an der Längstrennwand 6 ist beispielsweise mit den Adaptern 11 der Fig. 1 ausgerüstet und lässt sich folglich mit den auf diese Weise realisierten Haken 11b auf die zugehörigen Quergurte 7 des dortigen flächigen Sicherungs-mittels der Quertrennwand 5 aufstecken. Vergleichbar wird bei der Verbindung der Quertrennwand 5 mit den beiden Längsbordwänden 2 vorgegangen.

In diesem Fall ist jeweils randseitig des Netzwerkes 7, 8 zur Realisierung der Quertrennwand 5 die Sicherungsstange 9 mit den Adaptern 11 der Fig. 1 ausgerüstet. Mithilfe der auf diese Weise realisierten Haken 11b übergreifen die Adapter 11 jeweils die einzelnen Quergurte 2a der dortigen Netzwerke 2a, 2b. Das beschriebene erfindungsgemäße flächige Sicherungsmittel kann auch ganz oder teilweise zur Realisierung der Längsbordwände 2 ebenso wie zur Realisierung der Frontwand 4 oder sogar der Rückwand 3 eingesetzt werden. Dazu mag die randseitig des Netzwerkes 7, 8 vorgesehene Sicherungsstange 9 in beispielsweise auf der Ladefläche 1 aufstehende Rungen 14, Ecksäulen 15 oder dergleichen jeweils lösbar eingreifen.

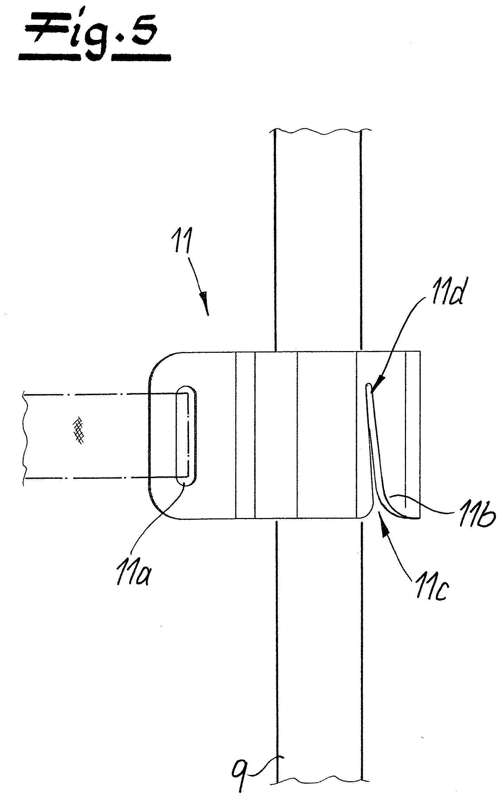

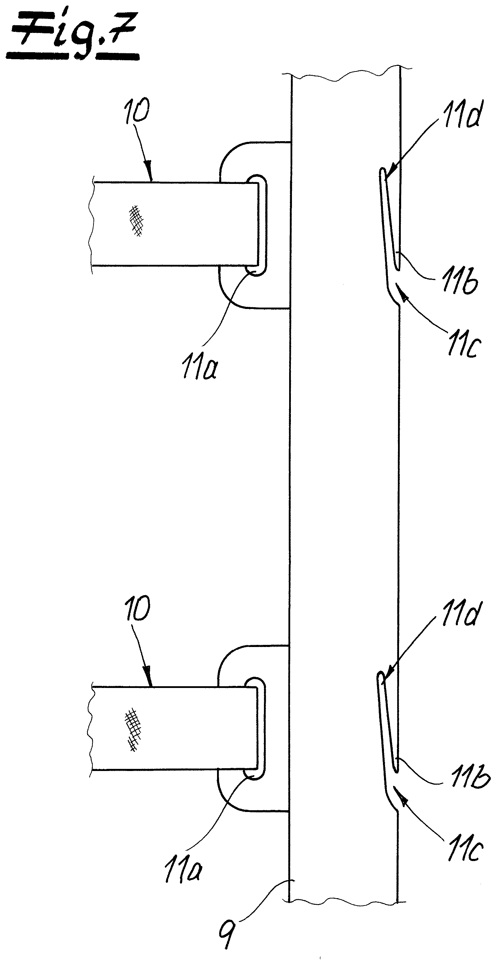

Gleiche Vorteile und Wirkungen werden für die weiteren Ausführungsbeispiele nach den Figuren 5 bis 7 beobachtet und können geltend gemacht werden. Tatsächlich lässt zunächst einmal die Fig. 7 eine Sicherungsstange 9 erkennen, die - wie zuvor bereits beschrieben - an der Bordwand 2 bis 6 beispielhaft festgelegt werden kann. Ebenso lässt sich die Sicherungsstange 9 mit den Rungen 14, Ecksäulen 15 oder anderen Bestandteilen des in der Fig. 4 dargestellten LKW-Aufliegers koppeln.

Im Rahmen des Ausführungsbeispiels nach der Fig. 7 ist die Sicherungsstange 9 mit zwei Haken 11b ausgerüstet, die jeweils Eingrifföffnungen 11c in der Sicherungsstange 9 beschreiben und definieren. Die beiden Haken 11b sind gegenüberliegend der Öse 11a an der Sicherungsstange 9 realisiert und als insgesamt integrale Bestandteile der Sicherungsstange 9 bei der Variante nach der Fig. 7 ausgebildet. D.h., bei den beiden Haken 11b und der zugehörigen Öse 11a handelt es sich in Verbindung mit der Sicherungsstange 9 insgesamt um eine Baueinheit 9; 11a, 11b, 11c und 11d. Denn die den beiden Haken 11b zugeordneten Eingrifföffnungen 11c fluchten größtenteils miteinander und definieren einen Eingriffkanal 11d, der nachfolgend noch näher beschrieben wird.

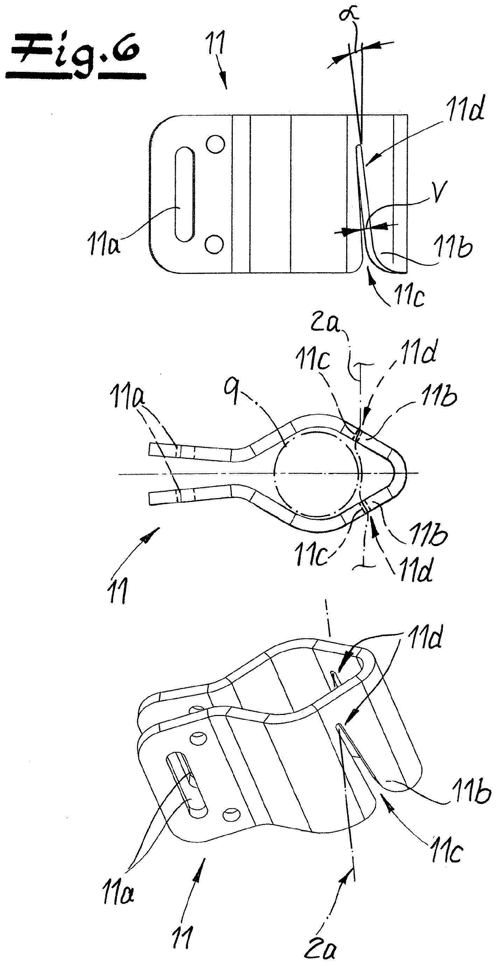

Demgegenüber ist in der Variante nach den Figuren 5 und 6 wiederum der an der Sicherungsstange 9 stufenlos festlegbare Adapter 11 dargestellt, welcher die beiden Haken 11b, die jeweils vom Haken 11b beschriebene Eingrifföffnung 11c und schließlich die Öse 11a aufweist und zusammenfasst. Gleiches gilt für den von beiden Eingrifföffnungen 11c definierten Eingriffkanal 11d. In die Öse 11a greift jeweils die Schlaufe 10 des Netzwerkes 7, 8 ein. Man erkennt, dass bei der Variante nach den Figuren 5 bis 7 die beiden Haken 11b bzw. deren hiervon definierte Eingrifföffnungen 11c größtenteils miteinander fluchten. Außerdem ist der Adapter 11 bei der gesamten Variante sowohl als Schlaufenadapter wie auch als Bordwandadapter ausgebildet.

Tatsächlich verfügen die beiden Haken 11b ausweislich der obersten Darstellung in der Fig. 6 und die von Haken 11b jeweils definierten Eingriffkanäle 11d über einen in der betreffenden obersten Darstellung der Fig. 6 eingezeichneten Versatz V, welcher maximal der vom jeweiligen Eingriffkanal 11d beschriebenen Spaltbreite entspricht. Dadurch wird erreicht, dass die beiden Eingrifföffnungen 11c größtenteils miteinander fluchten und auf diese Weise den aus den beiden Eingrifföffnungen 11c zusammengesetzten und hiervon beschriebenen Eingriffkanal 11d definieren, welcher zur Wechselwirkung mit der Bordwand 2 bis 6 bzw. den Rungen 14 respektive Ecksäulen 15 eingerichtet und ausgerüstet ist.

Dazu ist die Auslegung nach den Ausführungsbeispielen in den Figuren 5 bis 7 erneut so getroffen, dass in die fraglichen Eingrifföffnungen 11c und folglich den hiervon gebildeten Eingriffkanal 11d der Quergurt 2a des Netzwerkes 2a, 2b vergleichbar der Darstellung in der Fig. 2 eingreift bzw. eingreifen kann. Durch den geringfügigen Versatz V der Eingrifföffnungen 11c zueinander, wird die einleitend bereits beschriebene Klemmwirkung zwischen dem Adapter 11 und dem Netzwerk 2a, 2b bzw. dessen Quergurten 2a erreicht. Diese Klemmwirkung stellt sich besonders bei einer Kraftbeaufschlagung des erfindungsgemäßen flächigen Sicherungsmittels in Längsrichtung der Ladefläche 1 des Fahrzeuges ein.

Insbesondere anhand der Darstellung in den Figuren 6 und 7 erkennt man, dass die beiden Eingrifföffnungen 11c und folglich auch der von den beiden Eingrifföffnungen 11c beschriebene Eingriffkanal 11d größtenteils in Axialrichtung der Sicherungsstange 9 verlaufen. Das gilt sowohl bei der integralen Lösung nach der Fig. 7 als auch dann, wenn mit dem stufenlos auf der Sicherungsstange 9 festlegbaren Adapter 11 gearbeitet wird. Auf diese Weise kann der Quergurt 2a des Netzwerkes 2a, 2b zwanglos in der betreffenden Eingrifföffnung 11c und folglich dem Eingriffkanal 11d aufgenommen und hierin gehalten werden. Der zuvor bereits beschriebene Versatz V zwischen den beiden Eingrifföffnungen 11c sorgt in diesem Zusammenhang für die gewünschte Klemmwirkung.

Diese Klemmwirkung wird bei der Variante nach den Figuren 5 bis 7 noch dadurch verstärkt, dass die beiden Eingrifföffnungen 11c und folglich auch der von den beiden Eingrifföffnungen 11c definierte Eingriffkanal 11d im Vergleich zur Axialrichtung der Sicherungsstange 9 geneigt in Richtung auf das Netzwerk 7, 8 verläuft. Das ist insbesondere in der obersten Darstellung der Fig. 6 durch einen Neigungswinkel α gegenüber der Axialrichtung angedeutet. Tatsächlich werden in diesem Bereich Neigungswinkel α von weniger als 20° und insbesondere solche von weniger als 10° und vorzugsweise Neigungswinkel α im Bereich bis maximal 5° beobachtet.

Jedenfalls sorgt die geringfügig geneigte Auslegung der beiden Eingrifföffnungen 11c und folglich des von den Eingrifföffnungen 11c definierten Eingriffkanals 11d dafür, dass der Adapter 11 bzw. die Baueinheit 9; 11a, 11b, 11c, 11d klemmend an dem Quergurt 2a des Netzwerkes 2a, 2b im Beispielfall festgelegt wird. Eine vergleichbare Klemmwirkung wird natürlich auch für den Fall beobachtet, dass nicht der Quergurt 2a des Netzwerkes 2a, 2b im Eingriffkanal 11d aufgenommen wird, sondern stattdessen beispielsweise ein Steg oder eine Lasche an einer festen Bordwand 2 bis 6.

Anhand der Fig. 5 wird deutlich, dass die Sicherungsstange 9 gegenüberliegend zu dem Haken 11b mit der wenigstens einen Öse 11a zur Festlegung der jeweiligen Schlaufe 10 des Netzwerkes 7, 8 ausgerüstet ist, wie dies vergleichbar die Fig. 1 zeigt. Der Haken 11b und die Öse 11a sind ebenso wie die beiden Eingrifföffnungen 11c und der von den beiden Eingrifföffnungen 11c beschriebene Eingriffkanal 11d bei der Variante nach den Figuren 5 und 6 als Bestandteile des stufenlos an der Sicherungsstange 9 festlegbaren Adapters 11 ausgebildet. Ähnliches gilt auch schon bereits für den in den Figuren 1 bis 3 dargestellten Adapter 11. Allerdings ist der Adapter 11 bei der Variante nach den Figuren 5 und 6 als die Sicherungsstange 9 umgreifender Klemmadapter ausgebildet. Die bei der Variante nach den Figuren 1 bis 3 erläuterte Führungseinrichtung 12 ist in diesem Fall entbehrlich, wenngleich zusätzlich möglich. Im Fall des Beispiels nach den Figuren 5 und 6 ist der Adapter 11 als Kunststoffspritzgussteil ausgebildet.

Insbesondere Anhand der Darstellung in der Fig. 6 erkennt man, dass der Adapter bzw. Klemmadapter 11 nach dem Ausführungsbeispiel der Figuren 5 und 6 im Querschnitt Ω-förmig ausgebildet ist. Tatsächlich setzt sich der Adapter 11 im Wesentlichen aus einem Stangenbereich 16 und zwei daran anschließenden Klemmschenkeln 17 zusammen. Der Stangenbereich 16 des Adapters 11 bei der Variante nach den Figuren 5 und 6 setzt sich seinerseits und ausweislich der mittleren Schnittdarstellung in der Fig. 6 aus zwei sich gegenüberliegenden V-Schenkeln zusammen, die einen stumpfen Winkel zwischen sich einschießen.

Die beiden V-Schenkel sind ihrerseits spitzwinklig frontseitig des Adapters 11 miteinander verbunden und weisen gegenüberliegend ihrer Verbindung die beiden daran anschließenden Klemmschenkel 17 auf. Man erkennt, dass die beiden Klemmschenkel 17 nach außen aufgebogen sind, so dass sie mit Hilfe eines oder mehrerer Verbindungsmitte 18 abstandsvariabel miteinander gekoppelt werden können. Sobald folglich über das lösbare Verbindungsmittel 18 bzw. die mehreren Verbindungsmittel 18 die beiden Klemmschenkel 17 einander angenähert werden, wird die im Stangenbereich 16 von den beiden dort sich gegenüberliegenden V-Schenkeln eingeklemmte Sicherungsstange 9 im Inneren des Stangenbereiches 16 lösbar gehalten. Dadurch kann der fragliche Adapter 11 bzw. Klemmadapter stufenlos in jeder beliebigen axialen Position an der Sicherungsstange 9 lösbar festgelegt werden. Als Folge hiervon lässt sich der fragliche Adapter 11 problemlos an unterschiedliche Auslegungen und Abstände der Quergurte 2a des Netzwerkes 2a, 2b beispielsweise bei der Variante nach der Fig. 4 festlegen.

## Patentansprüche

1. Flächiges Sicherungsmittel, insbesondere Sicherungsnetz, zum Sichern einer Ladung während ihres Transportes auf der Ladefläche (1) eines Fahrzeuges, mit einer flexiblen Sicherungsfläche, welche als Netzwerk (7, 8) aus sich kreuzenden Gurten (7, 8) oder Seilen ausgebildet ist, und mit wenigstens einer Sicherungsstange (9), welche mit dem Netzwerk (7, 8) über Schlaufen (10) verbunden ist, wobei die Sicherungsstange (9) mit wenigstens einem Haken (11b) zur Festlegung der Sicherungsstange (9) beispielsweise an einer Bordwand (2 bis 6) ausgerüstet ist, **dadurch gekennzeichnet, dass**
der Haken (11b) und eine Öse (11a) zur Festlegung der jeweiligen Schlaufe (10) als Bestandteile eines stufenlos an der Sicherungsstange (9) festlegbaren Adapters (11) ausgebildet sind.

2. Sicherungsmittel nach Anspruch 1, **dadurch gekennzeichnet, dass** zwei Haken (11b) vorgesehen sind, die in größtenteils fluchtender Anordnung zueinander einen Eingriffkanal (11d) zur Wechselwirkung mit der Bordwand (2 bis 6) definieren.

3. Sicherungsmittel nach Anspruch 2, **dadurch gekennzeichnet, dass** der Eingriffkanal (11d) größtenteils in Axialrichtung der Sicherungsstange (9) verläuft.

4. Sicherungsmittel nach einem der Ansprüche 2 oder 3, **dadurch gekennzeichnet, dass** der Eingriffkanal (11d) im Vergleich zur Axialrichtung der Sicherungsstange (9) geneigt in Richtung auf das Netzwerk (7, 8) verläuft.

5. Sicherungsmittel nach Anspruch 4, **dadurch gekennzeichnet, dass** ein Neigungswinkel (a) von weniger als 20°, insbesondere weniger als 10° und vorzugsweise bis zu 5° vorliegt.

6. Sicherungsmittel nach einem der Ansprüche 1 bis 5, **dadurch gekennzeichnet, dass** die Sicherungsstange (9) gegenüberliegend zum Haken (11b) mit wenigstens der Öse (11a) zur Festlegung der jeweiligen Schlaufe (10) des Netzwerkes (7, 8) ausgerüstet ist.

7. Sicherungsmittel nach einem der Ansprüche 1 bis 6, **dadurch gekennzeichnet, dass** der Adapter (11) an oder in einer Führungseinrichtung (12) an der Sicherungsstange (9) stufenlos festlegbar ist.

8. Sicherungsmittel nach einem der Ansprüche 1 bis 7, **dadurch gekennzeichnet, dass** der Adapter (11) als einteilig gebogener Draht ausgebildet ist.

9. Sicherungsmittel nach Anspruch 8, **dadurch gekennzeichnet, dass** der Draht G-förmig gebogen ist, wobei ein Bauch des G-förmig gebogenen Drahtes die Öse (11a) und ein Schenkel den Haken (11b) definieren.

10. Sicherungsmittel nach einem der Ansprüche 7 bis 9, **dadurch gekennzeichnet, dass** die Führungseinrichtung (12) als in die Sicherungsstange (9) eingelassene Führungsnut (12) ausgebildet ist.

11. Sicherungsmittel nach einem der Ansprüche 1 bis 10, **dadurch gekennzeichnet, dass** der Adapter (11) im Querschnitt Ω-förmig mit einem Stangenbereich (16) und zwei daran anschließenden Klemmschenkeln (17) ausgelegt ist.

12. Sicherungsmittel nach Anspruch 11, **dadurch gekennzeichnet, dass** die beiden Klemmschenkel (17) über zumindest ein Verbindungsmittel (18) abstandsvariabel miteinander gekoppelt sind.

13. Sicherungsmittel nach einem der Ansprüche 8 bis 12, **dadurch gekennzeichnet, dass** der Adapter (11) als die Sicherungsstange 9 umgreifender Klemmadapter ausgebildet ist.

## Claims

1. Planar securing means, more particularly a securing net, for securing a cargo during its transportation on the loading surface (1) of a vehicle, with a flexible securing surface which is configured as a network (7, 8) of crossing straps (7, 8) or ropes, and with at least one securing bar (9) which is connected to the network (7, 8) by way of loops (10), wherein the securing bar (9) is fitted with at least one hook (11b) for fixing the securing bar (9) to a side wall (2 to 6) **characterised in that**
the hook (11b) and an eye (11a) for fixing the respective loop (10) are designed as a component part of an adapter (11) which can be steplessly fixed on the securing bar (9).

2. Securing means according to claim 1 **characterised in that** two hooks (11b) are provided, which, arranged largely flush with regard to each other, define an engagement channel (11d) for interaction with the side wall (2 to 6).

3. Securing means according to claim 2 **characterised in that** the engagement channel (11d) extends largely in the axial direction of the securing bar (9).

4. Securing means according to any one of claims 2 or 3 **characterised in that** compared with the axial direction of the securing bar (9), the engagement channel (11d) extends in an inclined manner in the direction of the network (7, 8) .

5. Securing means according to claim 4 **characterised in that** an angle of inclination (a) of less than 20°, in particular less than 10° and preferably up to 5° is present.

6. Securing means according to any one of claims 1 to 5 **characterised in that** opposite the hook (11b), the securing bar (9) is equipped with at last one of the eyes (11a) for fixing the respective loop (10) of the network (7, 8).

7. Securing means according to any one of claims 1 to 6 **characterised in that** the adapter (11) can be steplessly fixed to or in a guide device (12) on the securing bar (9).

8. Securing means according to any one of claims 1 to 7 **characterised in that** the adapter (11) is designed as a one-piece, bent wire.

9. Securing means according to claim 8 **characterised in that** the wire is bent in a G shape, wherein a belly of the G-shaped bent wire defines the eye (11a) and a shank defines the hook (11b).

10. Securing means according to any one of claims 7 to 9 **characterised in that** the guide device (12) is designed as a guide groove (12) which is recessed into the guide bar (9) .

11. Securing means according to any one of claims 1 to 10 **characterised in that** the adapter (11) is Ω-shaped in cross-section with a bar section (16) and two clamping shanks (17) adjoining it.

12. Securing means according to claim 11 **characterised in that** the two clamping shanks (17) are coupled to each other at a variable distance by means of at least one connecting means (18).

13. Securing means according to any one of claims 8 to 12 **characterised in that** the adapter (11) is designed as a clamping adapter encompassing the securing bar (9).

## Revendications

1. Moyen de sécurisation plan, notamment filet de sécurisation, destiné à sécuriser un chargement pendant son transport sur la surface de chargement (1) d'un véhicule, pourvu d'une surface de sécurisation souple, laquelle est conçue sous la forme d'un réseau (7, 8) de sangles (7, 8) ou de câbles qui se croisent, et pourvu d'au moins une barre de sécurisation (9), qui est reliée avec le réseau (7, 8) par l'intermédiaire de boucles (10), la barre de sécurisation (9) étant équipée d'au moins un crochet (11b), destiné à immobiliser la barre de sécurisation (9) par exemple sur un hayon (2 à 6), **caractérisé en ce que**
le crochet (11b) et un œillet (11a) destiné à immobiliser la boucle (10) concernée sont conçus sous la forme de parties d'un adaptateur susceptible (11) d'être immobilisé en continu sur la barre de sécurisation (9).

2. Moyen de sécurisation selon la revendication 1, **caractérisé en ce que** deux crochets (11b) sont prévus, qui en disposition réciproque largement alignée définissent un canal d'intervention (11d), destiné à interagir avec le hayon (2 à 6).

3. Moyen de sécurisation selon la revendication 2, **caractérisé en ce que** le canal d'intervention (11d) s'écoule en majeure partie dans la direction axiale de la barre de sécurisation (9).

4. Moyen de sécurisation selon l'une quelconque des revendications 2 ou 3, **caractérisé en ce que** le canal d'intervention (11d) s'écoule en inclinaison par rapport à la direction axiale de la barre de sécurisation (9) en direction du réseau (7, 8).

5. Moyen de sécurisation selon la revendication 4, **caractérisé en ce qu'**un angle d'inclinaison (α) de moins de 20°, notamment de moins de 10° et de préférence de jusqu'à 5° est présent.

6. Moyen de sécurisation selon l'une quelconque des revendications 1 à 5, **caractérisé en ce que** la barre de sécurisation (9) est équipée au vis-à-vis du crochet (11b) d'au moins l'œillet (11a) destiné à immobiliser la boucle (10) concernée du réseau (7, 8).

7. Moyen de sécurisation selon l'une quelconque des revendications 1 à 6, **caractérisé en ce que** l'adaptateur (11) est susceptible d'être immobilisé en continu sur ou dans un système de guidage (12) sur la barre de sécurisation (9).

8. Moyen de sécurisation selon l'une quelconque des revendications 1 à 7, **caractérisé en ce que** l'adaptateur (11) est conçu sous la forme d'un fil métallique recourbé d'un tenant.

9. Moyen de sécurisation selon la revendication 8, **caractérisé en ce que** le fil métallique est recourbé en forme de G, un renflement du fil métallique recourbé en G définissant l'œillet (11a) et une branche du crochet (11b).

10. Moyen de sécurisation selon l'une quelconque des revendications 7 à 9, **caractérisé en ce que** le système de guidage (12) est conçu sous la forme d'une rainure de guidage (12) ménagée dans la barre de sécurisation (9).

11. Moyen de sécurisation selon l'une quelconque des revendications 1 à 10, **caractérisé en ce que** l'adaptateur (11) est conçu avec une section transversale en forme de Ω, avec une zone de barre (16) et deux branches de serrage (17) qui s'y raccordent.

12. Moyen de sécurisation selon la revendication 11, **caractérisé en ce que** les deux branches de serrage (17) sont accouplées l'une à l'autre avec un écart variable par l'intermédiaire d'au moins un moyen de liaison (18).

13. Moyen de sécurisation selon l'une quelconque des revendications 8 à 12, caractérisé en ce l'adaptateur (11) est réalisé sous la forme d'un adaptateur de serrage entourant la barre de sécurisation (9).
